# FASCICULE DE BREVET EUROPEEN

(11) **EP 0 983 517 B1**
(45) Date de publication et mention de la délivrance du brevet: **17.09.2003**
(21) Numéro de dépôt: 98925744.9
(22) Date de dépôt: 19.05.1998
(51) Int. Cl.: G01P 15/10, G01P 1/00, G01P 1/02

(54) **MICRO-ACCELEROMETRE A RESONATEUR CAPACITIF**
MIKROMECHANISCHER BESCHLEUNIGUNGSMESSER MIT KAPAZITIVEM RESONATOR
MICRO-ACCELEROMETER WITH CAPACITIVE RESONATOR

(30) Priorité: 23.05.1997 FR 9706332
(43) Date de publication de la demande: 08.03.2000
(73) Titulaire: THALES AVIONICS S.A., 78141 Vélizy Villacoublay Cédex (FR)
(72) Inventeur: LEFORT, Olivier Thomson-CSF Protection & Conseil, 94117 Arcueil Cedex (FR); THOMAS Isabelle Thomson-CSF Protection & Conseil, 94117 Arcueil Cedex (FR)
(74) Mandataire: Guérin, Michel
(86) Numéro de dépôt international: FR9800997
(87) Numéro de publication internationale: WO98053328

(56) Documents cités:
- EP-A- 0 363 003
- DE-A- 4 213 135
- GB-A- 2 162 314
- GB-A- 2 215 053

## Description

L'invention concerne la réalisation de micro-accéléromètres usinés en silicium, notamment des accéléromètres pour applications d'aide à la navigation dans les aéronefs.

Plus précisément, l'invention concerne un accéléromètre à résonateur, dans lesquels une masse sismique micro-usinée est reliée par une poutre vibrante, également micro-usinée, à un cadre fixe formant une partie du bâti de l'accéléromètre. La poutre est mise en tension mécanique par le poids de la masse sismique, et la vibration de la poutre est excitée électrostatiquement par un circuit oscillant comprenant un condensateur à armature mobile, la position de la poutre déterminant la position de l'armature. Le champ électrique appliqué au condensateur par le circuit oscillant tend à déplacer la poutre, et le déplacement de la poutre modifie la valeur du condensateur du circuit oscillant; le bouclage du circuit oscillant est tel qu'une résonance mécanique et électrique se produit à une fréquence de vibration propre de la poutre. La fréquence de résonance, c'est-à-dire la fréquence à laquelle la poutre entre naturellement en vibration auto-entretenue, dépend de la tension mécanique exercée longitudinalement sur celle-ci, comme cela se passe par exemple pour une corde d'instrument de musique. Cette tension mécanique dépend elle-même de l'accélération à laquelle est soumise la masse sismique qui exerce la tension. Une mesure de fréquence dans le circuit résonant représente alors une mesure d'accélération.

Un tel micro-accéléromètre est donc une combinaison de structure mécanique (masse sismique, poutre vibrante, autres bras de suspension, bâti fixe) et de structure électrique (armatures de condensateur, connexions d'amenée de courant, et circuiterie extérieure réalisant un circuit résonant).

Les caractéristiques qu'on attend d'un tel accéléromètre sont principalement le faible encombrement, la bonne sensibilité selon un axe de mesure d'accélération bien identifié, appelé axe sensible, une faible sensibilité aux accélérations selon les axes perpendiculaires à l'axe sensible, une bonne linéarité et une bonne précision de la mesure d'accélération, une bonne tenue mécanique aussi bien lors d'accélérations ou de chocs dans le sens de l'axe sensible que dans des directions transversales, et enfin un faible coût de fabrication.

Le coût est d'autant plus limité que l'on peut utiliser une fabrication par lots, et c'est pourquoi on a imaginé des procédés d'usinage de silicium dérivés des technologies de fabrication de circuits intégrés.

On a déjà proposé en particulier de réaliser à la fois la masse sismique et sa suspension en silicium, le reste de l'accéléromètre étant en quartz qu'on sait également micro-usiner, des armatures électriques étant déposées sur le quartz tournées vers la plaque active de silicium. On a pu constater des inconvénients de ces structures mixtes, notamment du fait que cela rend plus difficile la réalisation des parties électriques du résonateur.

On a proposé également des structures de micro-accéléromètres en silicium dans lesquelles la poutre vibrante constitue un support mécanique déformable portant une jauge de contrainte incorporée à un circuit apte à détecter des variations de résistance et à les amplifier pour les réinjecter dans une commande électrostatique de la poutre. Cette structure présente l'avantage d'éviter des problèmes de couplage électrique entre les éléments qui ne participent pas véritablement au circuit de mesure, mais la fabrication est plus compliquée, spécialement à cause de la nécessité des jauges de contrainte et des connexions du circuit électrique. Dans ce cas, une seule des plaques est active électriquement; les autres plaques servent surtout de capot de fermeture. Des erreurs sont par ailleurs induites par l'utilisation de matériaux hétérogènes.

La présente invention a pour but de proposer une nouvelle structure de micro-accéléromètre en technologie silicium. Ce micro-accéléromètre comporte trois plaques de silicium conducteur micro-usinées, soudées en superposition avec interposition de couches isolantes, la plaque centrale comprenant un sous-ensemble sensible aux accélérations, et un cadre périphérique isolé électriquement du sous-ensemble et entourant le sous-ensemble, ce cadre formant entretoise entre une plaque inférieure et une plaque supérieure dont il est également isolé électriquement. Le sous-ensemble comprend un pied fixé sur la plaque inférieure et une masse sismique en porte-à-faux suspendue au pied, une liaison électrique étant établie entre la plaque inférieure et le pied du sous-ensemble. La suspension de la masse sismique comprend d'une part une poutre vibrante centrale reliée à la masse sismique et au pied et placée sensiblement dans le plan horizontal d'une face supérieure de la masse sismique, et d'autre part deux bras de suspension latéraux courts reliés au pied et placés de part et d'autre de la poutre centrale mais dans un plan horizontal passant sensiblement par le centre de gravité de la masse sismique.

L'expression plan horizontal est utilisée ici par commodité pour désigner le plan parallèle des trois plaques de silicium, l'accéléromètre étant supposé placé de telle manière que les plaques soient horizontales (les accélérations mesurées étant alors verticales du fait que l'axe sensible est perpendiculaire à la surface des plaques).

Le pied du sous-ensemble sismique ou la masse sismique (ou l'un et l'autre) a de préférence une forme de U vue sur un plan horizontal, l'intérieur du U étant tournée vers la masse sismique (ou réciproquement vers le pied), la poutre vibrante étant reliée au centre du U et les bras de suspension latéraux étant reliés aux extrémités des branches du U. Cette forme de U permet de réaliser des bras de suspension courts par rapport à la longueur de la poutre vibrante.

Dans le but d'éviter autant que possible un travail de flexion de la poutre vibrante, le point de fixation de cette poutre sur la masse sismique est de préférence situé sensiblement à l'aplomb d'un axe d'articulation fictif de la masse sismique autour de la fixation représentée par les bras de suspension. Autrement dit, si on considère qu'en l'absence de liaison avec la poutre vibrante la masse sismique n'est reliée au pied que par les bras de suspension latéraux, la suspension se comporte à peu près comme un axe d'articulation horizontal autour duquel la masse peut tourner, et on s'arrange pour que le point de fixation de la poutre vibrante sur la masse sismique soit à peu près à l'aplomb vertical de cet axe. Ceci limite au maximum les déformations en flexion de la poutre vibrante.

Mais on peut prévoir aussi que c'est plutôt le milieu de la poutre vibrante qui est situé sensiblement à l'aplomb de l'axe d'articulation, si on préfère privilégier la stabilité thermique du capteur.

L'excitation de cet accéléromètre est réalisée en reliant à un circuit résonant la plaque supérieure d'une part et la plaque inférieure d'autre part, grâce à des prises de contact formées sur le silicium de ces deux plaques. La tension électrique appliquée à la plaque inférieure, par une prise de contact sur cette plaque, est transmise, par conduction du silicium, jusqu'à la poutre vibrante qui forme une armature (en silicium conducteur) d'un condensateur, en vis-à-vis d'une portion de plaque supérieure, également en silicium conducteur, qui forme l'autre armature du condensateur; cette autre armature est reliée électriquement, là encore par conduction directe du silicium, à une prise de contact sur la plaque supérieure. Il n'est pas nécessaire de prévoir des dépôts conducteurs sur les plaques de silicium pour former les armatures de condensateur.

La plaque centrale est de préférence connectée, par une prise de contact électrique sur le silicium, à un potentiel fixe permettant d'éviter, par un effet de blindage capacitif, des transmissions capacitives de courants haute fréquence entre plaque supérieure et plaque inférieure.

Ceci est possible en particulier dans une configuration où le cadre périphérique est physiquement séparé complètement du sous-ensemble sismique, par gravure du silicium de la plaque centrale sur toute l'épaisseur de celle-ci entre le cadre et le sous-ensemble (sur toute la périphérie de ce dernier).

D'autres caractéristiques et avantages de l'invention apparaîtront à la lecture de la description détaillée qui suit et qui est faite en référence aux dessins annexés dans lesquels :
- la figure 1 représente le principe d'articulation de la masse sismique de l'accéléromètre;
- la figure 2 représente une coupe verticale d'un accéléromètre selon l'invention;
- la figure 3 représente une vue horizontale de dessus de la plaque centrale de l'accéléromètre.
- la figure 4 représente un circuit résonant dans lequel est connectée la structure mécanique formant le coeur de l'accéléromètre.

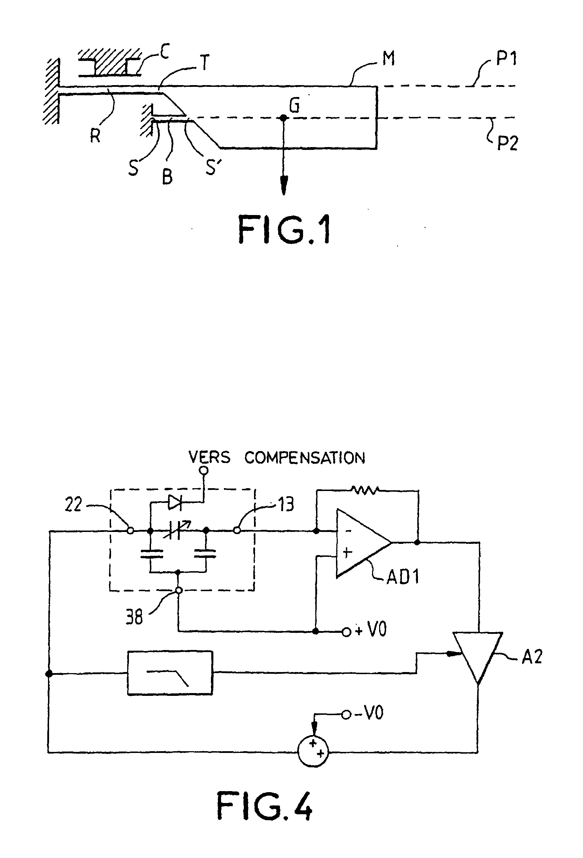

Avant d'entrer dans la réalisation de l'accéléromètre selon l'invention, on va expliquer en référence à la figure 1 le principe général de suspension de la masse sismique. La flèche verticale vers le bas indique le sens de la force de gravité exercée sur le centre de gravité G de la masse sismique M. Les plans horizontaux mentionnés ci-après sont perpendiculaires au plan de la figure et passent par les lignes horizontales de la figure 1.

La masse M est suspendue en porte-à-faux par deux structures différentes.

La première structure est la poutre vibrante formant résonateur R. Elle est reliée d'une part à la masse sismique M en un point d'accrochage T et d'autre part à un bâti fixe de l'accéléromètre; elle est placée dans le plan horizontal de la partie supérieure de la masse sismique ou au voisinage de ce plan. Elle forme une armature d'un condensateur dont une autre armature C est constituée par un élément de bâti fixe conducteur placé au dessus de la poutre vibrante.

La deuxième structure est une suspension beaucoup plus souple que la poutre, formant en quelque sorte une articulation autour de laquelle la poutre tend à tourner lorsque la masse M est soumise à une accélération selon un axe sensible vertical; l'axe de cette articulation est horizontal et perpendiculaire au plan de la figure 1. En pratique, cette deuxième structure comporte deux bras de suspension courts, parallèles, dans un plan horizontal, pour empêcher des mouvements de torsion de la masse sismique. Ces bras sont des lames minces situées dans un même plan horizontal. Un seul de ces bras, B, est visible sur la figure 1. Les deux bras sont disposés latéralement par rapport à la poutre vibrante, mais dans un plan horizontal différent de celui de la poutre vibrante : la poutre est dans le plan supérieur P1 de la masse sismique, mais les bras de suspension sont sensiblement dans un plan horizontal P2 passant par le centre de gravité G de la masse sismique. Ceci permet de donner à l'accéléromètre un axe sensible dans le sens vertical en minimisant l'influence des accélérations horizontales.

L'axe d'articulation horizontal défini par les bras de suspension latéraux est perpendiculaire à la longueur de la poutre vibrante (ceci résulte de la symétrie globale de la structure par rapport à un plan vertical coupant la poutre par son milieu dans le sens de la longueur).

D'autre part, on prévoit que cet axe horizontal d'articulation passe à peu près à l'aplomb vertical du point T d'accrochage de la poutre vibrante sur la masse sismique. Cette disposition tend à empêcher des mouvements de flexion de la poutre vibrante en présence d'accélérations verticales, mouvements qui perturberaient la mesure. Le point d'articulation d'un bras de suspension peut être considéré comme étant le point S d'accrochage du bras sur le bâti fixe ou le point S' d'accrochage du bras sur la masse sismique, ou encore un point intermédiaire entre S et S', les points S et S' étant de toutes façons assez rapprochés. L'axe d'articulation horizontal de la masse sismique passe par le point ainsi défini, perpendiculairement à la feuille sur la figure 1, et c'est cet axe qui doit passer autant que possible à l'aplomb du point d'accrochage T pour qu'une force verticale exercée sur le centre de gravité G de la masse, force qui se traduit par un moment de rotation autour de l'axe d'articulation, tende à exercer sur la poutre vibrante une traction horizontale sans flexion verticale.

Ayant ainsi défini la structure globale de l'articulation de la masse sismique, on va expliquer en détail la réalisation selon l'invention à partir de trois plaques de silicium.

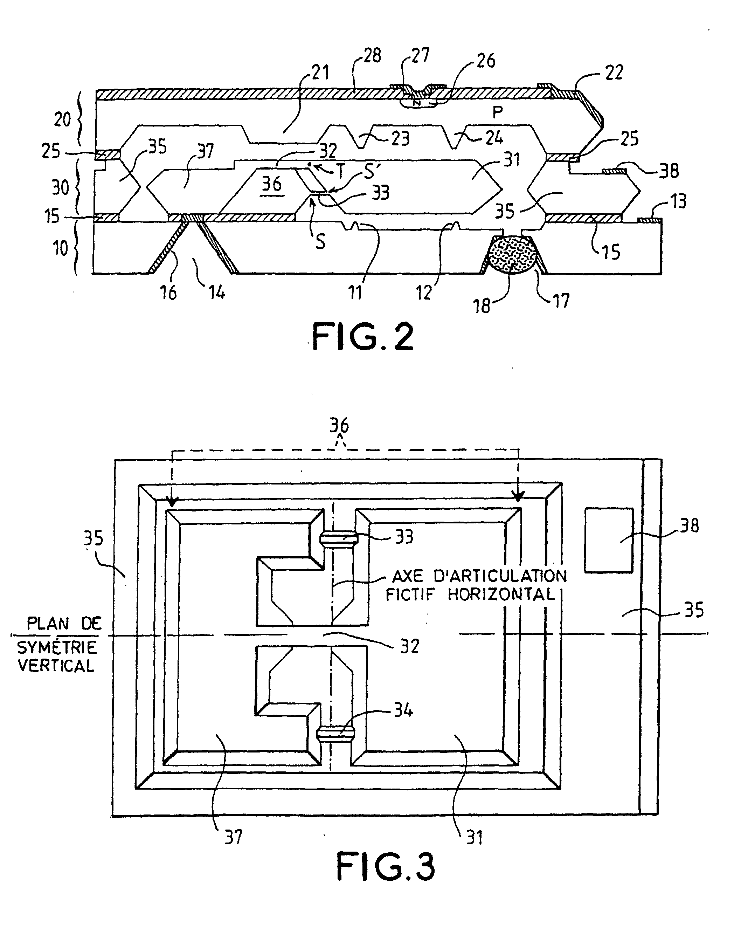

La figure 2 représente une coupe transversale de l'accéléromètre par un plan vertical de symétrie de l'accéléromètre, qui est un plan coupant la masse sismique d'une part, et la poutre vibrante formant résonateur d'autre part, symétriquement et dans toute la longueur de celles-ci. L'accéléromètre est en effet à structure globalement symétrique par rapport à un plan vertical, au moins en ce qui concerne la masse sismique et la poutre formant résonateur. On supposera encore dans les explications qui suivent que l'accéléromètre est globalement disposé horizontalement, et que l'axe sensible de l'accéléromètre est vertical, c'est-à-dire qu'on cherche à mesurer des accélérations dans le sens vertical dans une construction telle que la mesure soit influencée le moins possible par les accélérations horizontales.

L'accéléromètre est constitué par la superposition de trois plaques de silicium conducteur usiné, disposées horizontalement et soudées ou collées entre elles en restant séparées les unes des autres par des couches minces isolantes qui sont de préférence en oxyde de silicium. La plaque inférieure et la plaque supérieure sont désignées respectivement par les références 10 et 20. La plaque centrale est désignée par la référence 30. La couche d'oxyde de silicium séparant la plaque inférieure et la plaque centrale est la couche 15; et la couche d'oxyde de silicium séparant la plaque centrale et la plaque supérieure est la couche 25. Comme on peut le voir, la couche d'oxyde de silicium 25 réalise une isolation électrique complète des plaques supérieure et centrale 20 et 30, mais la couche 15 est localement interrompue pour permettre de relier électriquement la poutre de suspension de la masse sismique à la plaque inférieure pour permettre d'amener une tension électrique de la plaque inférieure 10 vers la plaque centrale 30.

La figure 3 représente une vue de dessus de la plaque centrale 30, dans laquelle on a usiné en particulier une masse sismique 31, une poutre de suspension 32 reliée à la masse sismique, et des bras de suspension latéraux 33 et 34. La figure 2 montre bien la symétrie globale par rapport à un plan vertical représenté par une ligne pointillée. La poutre est centrée par rapport à ce plan de symétrie qui la coupe par le milieu dans toute sa longueur. La masse sismique est également coupée symétriquement par ce plan. Les bras de suspension latéraux 33 et 34 sont disposés symétriquement de part et d'autre de ce plan de symétrie.

La plaque centrale 30 est en réalité constituée de deux parties bien distinctes qui sont électriquement isolées l'une de l'autre et qui pour cette raison ont été complètement séparées physiquement l'une de l'autre par gravure lors de la fabrication de l'accéléromètre. La première partie 35 est un cadre périphérique continu entourant toute la deuxième partie qui est la partie active 36 de l'accéléromètre. Le cadre périphérique 35 sert essentiellement d'entretoise de liaison entre la plaque inférieure 10 et la plaque supérieure 20 pour maintenir ces deux plaques écartées l'une de l'autre. Mais il sert aussi de blindage électrique entre les plaques 10 et 20. La partie active 36 de la plaque centrale est entièrement située entre les plaques inférieure et supérieure, et à l'intérieur du cadre périphérique 35.

La partie active comprend essentiellement :
- un pied fixe 37 rigidement relié à la plaque inférieure 10, par collage ou soudage, et relié électriquement à cette plaque; ce pied a, vu de dessus, une forme de U dont l'ouverture est tournée vers la masse sismique;
- la masse sismique 31 déjà mentionnée; son épaisseur est égale ou presque égale à l'épaisseur de la plaque centrale; elle est maintenue au pied 37 par la suspension en porte-à-faux (32, 33, 34) ;
- la poutre vibrante 32 formant résonateur, reliée d'un côté à la masse sismique et de l'autre au pied fixe, la liaison étant placée au centre du U; son épaisseur est très faible par rapport à l'épaisseur de la masse sismique; elle est disposée sensiblement dans le plan supérieur de la plaque centrale de façon à être assez proche de la plaque supérieure; elle forme en effet un condensateur avec la portion 21 de plaque supérieure qui est directement en vis-à-vis d'elle;
- les bras de suspension latéraux 33 et 34, qui sont des lames minces horizontales; ils sont reliés à la masse sismique d'une part et au pied fixe 37 d'autre part, l'un à l'extrémité d'une première branche du U, l'autre, symétriquement, à l'extrémité de la deuxième branche du U; leur épaisseur est encore plus faible que celle de la poutre formant résonateur et ils sont de préférence situés dans un plan horizontal sensiblement médian de la plaque centrale, c'est-à-dire dans un plan passant pratiquement par le centre de gravité de la masse sismique; leur longueur est faible par rapport à la longueur qui sépare l'extrémité du U du centre de gravité de la masse sismique; de plus, la forme en U du pied permet de donner à la poutre vibrante 32 une longueur notablement plus grande que la longueur des bras de suspension 33 et 34.

Les différents éléments de la plaque centrale sont réalisés par micro-usinage de la plaque. Ce micro-usinage consiste principalement en des gravures chimiques profondes en présence de masques photolithographiques qui protègent les régions qui ne doivent pas être attaquées.

Au lieu que le pied ait une forme de U, on peut prévoir que c'est la masse sismique qui a une forme de U ouvert du côté tourné vers le pied. On peut prévoir également que le pied et la masse sismique aient tous deux une forme de U et soient tournés l'un vers l'autre.

Pour séparer le cadre périphérique 35 de la partie active 36, la gravure s'étend sur toute l'épaisseur de la plaque, ou plus exactement sur deux fois la moitié de l'épaisseur car la gravure se fait de préférence à la fois par le haut et par le bas. La même gravure profonde double est utilisée pour définir la forme de U du pied 37 de la partie active et la forme de barres (vues de dessus) des bras de suspension 32, 33, 34. Pour définir l'épaisseur des bras de suspension latéraux 33 et 34, la gravure se fait également à la fois par le haut et par le bas mais en laissant subsister une faible épaisseur de silicium. Pour définir l'épaisseur de la poutre de suspension 32, la gravure peut se faire uniquement par le bas et sur presque toute l'épaisseur de la plaque, en laissant seulement subsister l'épaisseur désirée. L'épaisseur et la largeur de la poutre sont supérieures à celles des bras de suspension, la rigidité de la poutre devant être largement supérieure à celle des bras.

On remarquera que les gravures définissent des flancs de gravure obliques et non verticaux, l'attaque du silicium par voie chimique se faisant en effet préférentiellement selon des plans cristallins inclinés.

Les trois plaques de silicium sont électriquement conductrices, car elles participent directement au fonctionnement électrique du micro-accéléromètre; elles sont de préférence en silicium fortement dopé de type P (dopage au bore). Des contacts métalliques sont formés par dépôt et gravure (d'aluminium par exemple) sur la plaque inférieure (contact 13 sur le bord de la plaque), sur le cadre périphérique 35 de la plaque centrale (contact 38 sur le bord extérieur du cadre), et sur la plaque supérieure (contact 22 sur le bord de la plaque), pour relier chacune de ces plaques à un circuit électrique résonant auquel est connectée la structure décrite.

La plaque inférieure 10 est micro-usinée avec les particularités suivantes :
- la zone en regard de la masse sismique est attaquée pour définir précisément des butées, 11, 12 par exemple sous forme de pyramides ponctuelles ou de bandes étroites; ces butées permettent d'éviter une rupture de la poutre 32 ou des bras de suspension 33, 34 en cas de choc ou d'accélération trop forte dans le sens vertical; leur faible surface en regard de la masse sismique permet de limiter les capacités parasites ;
- d'autre part on s'arrange pour établir un contact électrique entre la plaque inférieure et le pied 37 de maintien de la masse sismique; le moyen préféré pour cela est une ouverture 14 creusée dans la plaque inférieure sur toute sa profondeur et à travers la couche d'oxyde de silicium 15; un dépôt conducteur 16 est réalisé dans cette ouverture pour relier électriquement la plaque 10 et le pied 37; cette structure permet de transmettre, à la poutre résonante 32, par conduction du silicium, une tension électrique appliquée au contact 13 de la plaque inférieure, la poutre constituant alors directement du fait de sa conduction propre, une armature de condensateur;
- enfin, dans le cas où la cavité contenant la masse sismique doit être vidée pour limiter le plus possible l'amortissement de la vibration de la poutre résonante, on peut prévoir d'usiner par gravure chimique une ouverture 17 à travers toute l'épaisseur de la plaque 10; cette ouverture peut être métallisée puis fermée par un bouchon 18 (en indium notamment ou alliage à bas point de fusion) pour sceller la cavité après l'avoir vidée; le vidage de la cavité hermétique formée par les plaques 10 et 20 et le cadre 35 permet d'éviter d'avoir à faire le vide dans le boîtier qui enferme la structure; cette structure avec vide intérieur permet de tester l'accéléromètre avant de le mettre dans un boîtier, ce qui est avantageux.

La plaque supérieure 20 comporte quant à elle les parties gravées suivantes :
- pour éviter les couplages capacitifs parasites entre la plaque supérieure et la partie active 36 de la plaque centrale, la plaque supérieure est gravée profondément partout où elle est en regard de cette partie active, sauf bien entendu là où le couplage capacitif est désiré et sert à la mesure de l'accélération, à savoir dans la partie 21 située exactement au dessus de la poutre de suspension 32.
- en regard de la masse sismique, la plaque supérieure est gravée profondément mais des butées très localisées 23, 24 sont laissées pour empêcher que la masse sismique ne se déplace trop loin, ce qui risquerait de casser les poutres de suspension en cas de choc notamment; là encore, la surface des butées en regard de la masse sismique est faible pour limiter les capacités parasites;
- enfin, la plaque supérieure n'est pas gravée en regard du cadre périphérique 35 de la plaque centrale.

Dans une réalisation préférentielle, un élément de compensation des variations de température est prévue dans le circuit résonant dans lequel agit le condensateur ainsi formé. On peut alors intégrer cet élément, ici par exemple une diode, dans l'une des plaques de silicium ; par exemple on diffuse une région de type N si les plaques sont de type P. Une solution facile consiste à prévoir une diffusion de type N, formant une région diffusée 26, dans la partie supérieure de la plaque supérieure 20, avec une électrode de contact 27 déposée sur cette région diffusée 26. Cette électrode de contact est réalisée par une métallisation (d'aluminium par exemple) qui rejoint (d'une manière non visible sur les figures) un bord de la plaque supérieure pour permettre une liaison avec l'extérieur de la structure. La métallisation est déposée au dessus d'une couche isolante 28 (oxyde de silicium par exemple) qui recouvre l'ensemble de la plaque supérieure à l'exception des zones de prise de contact avec la plaque et avec la région diffusée 26.

La prise de contact, par un dépôt métallique localisé 38, prévue sur le cadre périphérique 35 de la plaque centrale, permet de porter ce cadre à un potentiel constant, de manière qu'il fasse écran à toute influence capacitive entre la plaque supérieure et la plaque inférieure. En effet, ce couplage capacitif est particulièrement fort aux fréquences de résonance envisagées (qui peuvent atteindre plusieurs dizaines de kilohertz) et il perturbe la mesure puisqu'il rajoute une capacité en parallèle avec la capacité du résonateur proprement dit.

La figure 4 représente un schéma électrique simple dans lequel est incorporé la structure qui vient d'être décrite. La structure est symbolisée par un condensateur variable constitué entre la poutre vibrante et la plaque supérieure, et deux capacités parasites formées entre la plaque supérieure et la plaque centrale d'une part, entre la plaque inférieure et la plaque centrale d'autre part.

Un amplificateur différentiel AD1 est relié par son entrée inverseuse à la connexion 13 de la plaque inférieure, et sa sortie est rebouclée, à travers un amplificateur A2 à gain variable et un additionneur qui lui rajoute une tension de polarisation -V0, à la connexion de plaque supérieure 22. La plaque centrale est reliée par sa connexion 38 à un potentiel de polarisation +V0 qui est relié par ailleurs à l'entrée non inverseuse de l'amplificateur AD1. Le potentiel V0 est constant et constitue le potentiel de blindage électrostatique entre plaques, mentionné précédemment. Le gain de l'amplificateur A2 est asservi en fonction de l'amplitude moyenne du signal d'excitation appliqué à la connexion 22 de la plaque supérieure.

Ce schéma constitue un circuit résonant qui se met à osciller à une fréquence qui dépend de l'accélération. La dépendance est non linéaire; on utilise en général deux accéléromètres identiques, tête-bêche pour produire deux informations de fréquence dont la différence est proportionnelle avec une très bonne approximation et d'une manière bien linéaire à l'accélération.

Parmi les caractéristiques intéressantes de l'accéléromètre selon l'invention, on notera notamment qu'il ne nécessite aucun dépôt métallique sur les surfaces de silicium situées à l'intérieur de la cavité. Ceci réduit les contraintes mécaniques, les effets thermiques, et les évolutions de performances dans le temps ; de plus, on peut utiliser des étapes de fabrication à haute température (qui ne seraient pas possibles après dépôt de couches métalliques) et ces étapes améliorent la qualité des assemblages. Enfin, de manière générale, le fait que les trois plaques soient en silicium réduit considérablement les contraintes thermiques qui pourraient s'exercer entre les plaques, soit pendant les opérations de fabrication après collage de deux ou trois plaques, soit en fonctionnement.

## Revendications

1. Microaccéléromètre comportant trois plaques de silicium conducteur micro-usinées (10, 30, 20), soudées en superposition avec interposition de couches isolantes (15, 25), la plaque centrale (30) comprenant un sous-ensemble (36) sensible aux accélérations, et un cadre périphérique (35) isolé électriquement du sous-ensemble et entourant le sous-ensemble, ce cadre (35) formant entretoise entre une plaque inférieure (10) et une plaque supérieure (20) dont il est également isolé électriquement, le sous-ensemble (36) comprenant un pied (37) fixé sur la plaque inférieure (10) et une masse sismique (31) en porte-à-faux suspendue au pied, une liaison électrique étant établie entre la plaque inférieure et le pied du sous-ensemble, la suspension de la masse sismique comprenant d'une part une poutre vibrante centrale (32) reliée à la masse sismique et au pied et placée sensiblement dans le plan horizontal d'une face supérieure de la masse sismique, et d'autre part deux bras de suspension latéraux courts (33, 34) reliés au pied (37) et placés de part et d'autre de la poutre centrale (32) mais dans un plan horizontal passant sensiblement par le centre de gravité de la masse sismique.

2. Micro-accéléromètre selon la revendication 1, dans lequel le pied (37) du sous-ensemble sismique a une forme de U vue sur un plan horizontal, l'intérieur du U étant tourné vers la masse sismique (31), la poutre vibrante (32) étant reliée au centre du pied en U et les bras de suspension latéraux (33, 34) étant reliés aux extrémités des branches du U.

3. Micro-accéléromètre selon l'une des revendications 1 ou 2, dans lequel la masse sismique (31) du sous-ensemble sismique a une forme de U vue sur un plan horizontal, l'intérieur du U étant tourné vers le pied (37), la poutre vibrante (32) étant reliée au centre du pied en U et les bras de suspension latéraux (33, 34) étant reliés aux extrémités des branches du U.

4. Micro-accéléromètre selon l'une des revendications 2 et 3, dans lequel les bras de suspension latéraux sont plus courts que la poutre vibrante.

5. Micro-accéléromètre selon l'une des revendications 1 à 4, dans lequel le point de fixation (T) de la poutre vibrante (32) sur la masse sismique (31) est situé sensiblement à l'aplomb d'un axe d'articulation horizontal fictif de la masse sismique autour de la fixation représentée par les bras de suspension (33, 34).

6. Micro-accéléromètre selon l'une des revendications 1 à 4, dans lequel le milieu de la poutre vibrante (32) est situé sensiblement à l'aplomb d'un axe d'articulation horizontal fictif de la masse sismique autour de la fixation représentée par les bras de suspension (33, 34).

7. Micro-accéléromètre selon l'une des revendications précédentes, dans lequel le cadre périphérique est physiquement séparé du sous-ensemble sismique, par gravure du silicium de la plaque centrale sur toute l'épaisseur de celle-ci entre le cadre et le sous-ensemble sur toute la périphérie de ce dernier.

8. Micro-accéléromètre selon l'une des revendications précédentes, dans lequel il comporte au moins une prise de contact sur chacune des plaques de silicium, la prise de contact (13) de la plaque inférieure servant à appliquer une tension à la poutre vibrante (32) par conduction directe du silicium à travers la plaque inférieure et la plaque centrale, la prise de contact (22) sur la plaque supérieure servant à appliquer une tension à une zone (12) de plaque supérieure en vis-à-vis de la poutre (32), et la prise de contact (38) sur la plaque centrale servant à appliquer à cette plaque un potentiel fixe de blindage électrostatique.

9. Micro-accéléromètre selon la revendication 8, dans lequel le silicium de la poutre vibrante et le silicium de la zone de plaque supérieure en vis-à-vis forment les deux armatures d'un condensateur, inséré dans un circuit électrique oscillant par l'intermédiaire des contacts de plaque supérieure et de plaque inférieure.

10. Micro-accéléromètre selon l'une des revendications 1 à 9, dans lequel un élément de compensation de température (26) est intégré dans une des plaques de silicium.

11. Micro-accéléromètre selon l'une des revendications 1 à 10, dans lequel des butées (11, 12, 23, 24) sont usinées dans les plaques supérieure et inférieure en regard de la masse sismique (31), ces butées ayant une faible surface en regard de la masse sismique pour limiter les capacités parasites.

## Patentansprüche

1. Mikromechanischer Beschleunigungsmesser, mit drei mikromaterialbearbeiteten, leitfähigen Siliziumplatten (10, 30, 20), die mit dazwischengesetzten Isolationsschichten (15, 25) übereinandergelötet sind, wobei die zentrale Platte (30) einen beschleunigungsempfindlichen Teilaufbau und einen am Rand entlangführenden Rahmen (35) enthält, der elektrisch von dem Teilaufbau isoliert ist und um den Teilaufbau herumführt, wobei dieser Rahmen (35) das Zwischenstück zwischen einer unteren Platte (10) und einer oberen Platte (20) bildet, von denen er ebenfalls elektrisch isoliert ist, wobei der Teilaufbau (36) einen Fuß (37), der auf der unteren Platte (10) befestigt ist, und eine seismische Masse (31) umfaßt, die freitragend an dem Fuß aufgehängt ist, wobei eine elektrische Verbindung zwischen der unteren Platte und dem Fuß des Teilaufbaus hergestellt ist; die Aufhängung der seismischen Masse umfaßt einerseits einen mittig angeordneten, schwingungsfähigen Träger (32), der mit der seismischen Masse und dem Fuß verbunden ist und im wesentlichen in der horizontalen Ebene einer Oberseite der seismischen Masse plaziert ist, und andererseits zwei kurze seitliche Aufhängungsarme (33, 34), die mit dem Fuß (37) verbunden sind und auf beiden Seiten des mittigen Trägers (32) plaziert sind, jedoch in einer horizontalen Ebene, die im wesentlichen durch den Schwerpunkt der seismischen Masse führt.

2. Mikromechanischer Beschleunigungsmesser nach Anspruch 1, bei dem der Fuß (37) des seismischen Teilaufbaus in Draufsicht eine U-Form hat, wobei das Innere des U in Richtung seismischer Masse (31) gewendet ist, wobei der schwingungsfähige Träger (32) mit der Mitte des U-förmigen Fußes verbunden ist und die seitlichen Aufhängungsarme (33, 34) mit den Enden des U verbunden sind.

3. Mikromechanischer Beschleunigungsmesser nach einem der Ansprüche 1 oder 2, bei dem die seismische Masse (31) des seismischen Teilaufbaus in Draufsicht U-förmig ist, wobei das Innere des U in Richtung des Fußes (37) gerichtet ist, wobei der schwingungsfähige Träger (32) mit der Mitte des U-förmigen Fußes verbunden ist und die seitlichen Aufhängungsarme (33, 34) mit den Enden des U verbunden sind.

4. Mikromechanischer Beschleunigungsmesser nach einem der Ansprüche 2 und 3, bei dem die seitlichen Aufhängungsarme kürzer sind als der schwingungsfähige Träger.

5. Mikromechanischer Beschleunigungsmesser nach einem der Ansprüche 1 bis 4, bei dem der Befestigungspunkt (T) des schwingungsfähigen Trägers (32) an der seismischen Masse (31) sich im wesentlichen lotrecht über einer fiktiven, horizontalen Drehachse der seismischen Masse um die durch die Aufhängungsarme (33, 34) gebildete Befestigung befindet.

6. Mikromechanischer Beschleunigungsmesser nach einem der Ansprüche 1 bis 4, bei dem sich die Mitte des schwingungsfähigen Trägers (32) im wesentlichen lotrecht über einer fiktiven, horizontalen Drehachse der seismischen Masse um die durch die Aufhängungsarme (33, 34) gebildete Befestigung befindet.

7. Mikromechanischer Beschleunigungsmesser nach einem der vorhergegangenen Ansprüche, bei dem der am Rand entlangführende Rahmen dadurch, daß das Silizium der zentralen Platte über die gesamte Dicke dieser zentralen Platte zwischen dem Rahmen und dem Teilaufbau entlang des gesamten Umfanges dieses Teilaufbaus weggeätzt ist, körperlich von dem seismischen Teilaufbau getrennt ist.

8. Mikromechanischer Beschleunigungsmesser nach einem der vorhergegangenen Ansprüche, bei dem sich zumindest eine Kontaktierstelle auf jeder Siliziumplatte befindet, wobei die Kontaktierstelle (13) der unteren Platte dazu dient, an den schwingungsfähigen Träger (32) über die direkte Stromleitung des Siliziums durch die untere Platte und die zentrale Platte hindurch eine Spannung anzulegen, wobei die Kontaktierstelle (22) auf der oberen Platte dazu dient, an ein Gebiet (12) der oberen Platte gegenüber dem Träger (32) eine Spannung anzulegen, und wobei die Kontaktierstelle (38) auf der zentralen Platte dazu dient, an diese Platte ein festes Potential als elektrostatische Abschirmung anzulegen.

9. Mikromechanischer Beschleunigungsmesser nach Anspruch 8, bei dem das Silizium des schwingungsfähigen Trägers und das Silizium der gegenüberliegenden Zone der oberen Platte zusammen die zwei Beläge eines Kondensators bilden, welcher Kondensator über die Kontakte der oberen Platte und der unteren Platte in einen elektrischen Schwingkreis eingefügt ist.

10. Mikromechanischer Beschleunigungsmesser nach einem der Ansprüche 1 bis 9, bei dem ein Element zur Temperaturkompensation (26) in eine der Siliziumplatten integriert ist.

11. Mikromechanischer Beschleunigungsmesser nach einem der Ansprüche 1 bis 10, bei dem Anschläge (11, 12, 23, 24) in die obere Platte und in die untere Platte jeweils gegenüber der seismischen Masse (31) eingearbeitet sind, wobei diese Anschläge im Vergleich zu der seismischen Masse eine geringe Oberfläche haben, um parasitäre Kapazitäten klein zu halten.

## Claims

1. Micro-accelerometer having three micromachined conducting-silicon plates (10, 30, 20) welded in superposition with the interposition of insulating layers (15, 25), the central plate (30) comprising a subassembly (36) sensitive to accelerations, and a peripheral frame (35) electrically insulated from the subassembly and surrounding the subassembly, this frame (35) forming a spacer between a lower plate (10) and an upper plate (20) from which it is also electrically insulated, the subassembly (36) comprising a base (37) fixed on the lower plate (10) and a cantilevered proof mass (31) suspended from the base, an electrical connection being made between the lower plate and the base of the subassembly, the suspension of the proof mass comprising, on the one hand, a central vibrating beam (32) which is connected to the proof mass and to the base and is placed substantially in the horizontal plane of an upper face of the proof mass, and, on the other hand, two short side suspension arms (33, 34) which are connected to the base (37) and are placed on either side of the central beam (32) but in a horizontal plane passing substantially through the centre of gravity of the proof mass.

2. Micro-accelerometer according to Claim 1, in which the base (37) of the proof subassembly has a U-shape seen on a horizontal plane, the inside of the U being turned towards the proof mass (31), the vibrating beam (32) being connected to the centre of the U-shaped base and the side suspension arms (33, 34) being connected to the ends of the branches of the U.

3. Micro-accelerometer according to one of Claims 1 and 2, in which the proof mass (31) of the proof subassembly has a U-shape seen on a horizontal plane, the inside of the U being turned towards the base (37), the vibrating beam (32) being connected to the centre of the U-shaped base and the side suspension arms (33, 34) being connected to the ends of the branches of the U.

4. Micro-accelerometer according to one of Claims 2 and 3, in which the side suspension arms are shorter than the vibrating beam.

5. Micro-accelerometer according to one of Claims 1 to 4, in which the point (T) where the vibrating beam (32) is fixed on the proof mass (31) lies substantially in line with a fictitious horizontal axis of articulation of the proof mass about the fixture represented by the suspension arms (33, 34).

6. Micro-accelerometer according to one of Claims 1 to 4, in which the middle of the vibrating beam (32) lies substantially in line with a fictitious horizontal axis of articulation of the proof mass about the fixture represented by the suspension arms (33, 34).

7. Micro-accelerometer according to one of the preceding claims, in which the peripheral frame is physically separated from the proof subassembly by etching the silicon of the central plate through its full thickness between the frame and the subassembly, over the entire periphery of the latter.

8. Micro-accelerometer according to one of the preceding claims, which has at least one connection contact on each of the silicon plates, the connection contact (13) of the lower plate being used to apply a voltage to the vibrating beam (32) by direct silicon conduction through the lower plate and central plate, the connection contact (22) on the upper plate being used to apply a voltage to an upper-plate area (12) opposite the beam (32), and the connection contact (38) on the central plate being used to apply a fixed electrostatic-screening potential to this plate.

9. Micro-accelerometer according to Claim 8, in which the silicon of the vibrating beam and the silicon of the opposite upper-plate area form the two electrodes of a capacitor fitted into a tuned electrical circuit by means of the upper-plate and lower-plate contacts.

10. Micro-accelerometer according to one of Claims 1 to 9, in which a temperature-compensation element (26) is integrated in one of the silicon plates.

11. Micro-accelerometer according to one of Claims 1 to 10, in which stops (11, 12, 23, 24) are machined in the upper and lower plates facing the proof mass (31), these stops having a small area facing the proof mass in order to limit stray capacitances.
